# EUROPEAN PATENT SPECIFICATION

(11) **EP 2 006 266 B1**
(45) Date of publication and mention of the grant of the patent: **09.10.2019**
(21) Application number: 07739549.9
(22) Date of filing: 23.03.2007
(51) Int. Cl.: C04B 37/00, B01D 39/00, B01D 39/20, B01D 53/86, B01J 35/04, B01J 37/34, C04B 38/00, F01N 3/02

(54) **PROCESS FOR PRODUCING A HONEYCOMB STRUCTURE**
HERSTELLUNGSVERFAHREN EINER WABENSTRUKTUR
PROCÉDÉ POUR FABRIQUER UNE STRUCTURE EN NID D'ABEILLE

(30) Priority: 23.03.2006 JP 2006081796
(43) Date of publication of application: 24.12.2008
(73) Proprietor: NGK Insulators, Ltd., Nagoya-shi, Aichi 467-8530 (JP)
(72) Inventor: MASUKAWA, Naoshi, Aichi-prefecture 481-0031 (JP); WATANABE, Atsushi, Aichi 467-8530 (JP); ICHIKAWA, Shuichi, Aichi 467-8530 (JP)
(74) Representative: Mewburn Ellis LLP
(86) International application number: PCT/JP2007/056108
(87) International publication number: WO 2007/111281

(56) References cited:
- WO-A1-03/067041
- WO-A1-2005/105705
- JP-A- 2005 154 202

## Description

### Technical Field

The present invention relates to a process for producing a honeycomb structure. The honeycomb structure can be suitably used, for example, in a carrier for catalyst loading, installed in internal combustion engine, boiler, chemical reactor, fuel cell reformer, etc., or in a filter for capture of particulates in exhaust gas; a process for producing the honeycomb structure; and a bonding material. The honeycomb structure may be of large size, and is one wherein a plurality of honeycomb segments are reliably bonded to each other.

### Background Art

Ceramic-made honeycomb structures are in use, for example, in a carrier for catalyst loading, installed in internal combustion engine, boiler, chemical reactor, fuel cell reformer, etc., or in a filter for capture of particulates in exhaust gas, particularly diesel particulates (hereinafter, the filter for capture of diesel particulates is referred to as DPF).

Such a ceramic honeycomb structure is constituted by bonding, via an adhesive layer, a plurality of porous honeycomb segments each having a large number of passages divided by partition walls and extending in the axial direction of honeycomb segment (see, for example, Patent Document 1). That is, the ceramic honeycomb structure is constituted by combining square pole shape, porous honeycomb segments in rows and bonding them to each other via adhesive layers. The bonding is conducted by placing an adhesive layer between the to-be-adhered sides of two porous honeycomb segments and then applying a vibration to the honeycomb segments while applying a pressure to them. That is, the bonding step is conducted as follows. First, a first porous honeycomb segment having an undercoat layer formed on one to-be-bonded surface is placed on the lowermost position of the cut portion of a supporting jig. Then, a second porous honeycomb segment having an undercoat layer formed on one to-be-bonded surface and further having an adhesive coated on the undercoat layer is placed in close contact with the first porous honeycomb segment so that the to-be-bonded surfaces of the two honeycomb segments face each other via the adhesive. In this state, the end faces of the two honeycomb segments are pressed by a pressing plate for positioning of the two honeycomb segments. Further, a pressing jig is abutted to the second honeycomb segment to press it in a vertical direction and also give a vibration in a direction in which the to-be-bonded surfaces shift against each other. Thereby, the first and second honeycomb segments can be bonded to each other.

Then, a third porous honeycomb segment having an undercoat layer formed on one to-be-bonded surface and further having an adhesive coated on the undercoat layer is placed in close contact with the first honeycomb segment so that the other to-be-bonded surface of the first honeycomb segment and the to-be-bonded surface of the third honeycomb segment face each other via the adhesive. In this state, as in the case of the second honeycomb segment, the third honeycomb segment can be bonded to the first honeycomb segment. Further, a fourth porous honeycomb segment having undercoat layers formed on two to-be-bonded surfaces and further having an adhesive coated on each of the undercoat layers is placed between the second and third honeycomb segments in close contact with them. In this state, as in the cases of the second and third honeycomb segments, the fourth honeycomb segment can be bonded to the second and third honeycomb segments.

In the conventional bonding method, however, there is the following problem. Since pressure and vibration are applied in each bonding of porous honeycomb segments and such a bonding operation is repeated, the lower position honeycomb segments laminated earlier undergo vibration and pressure up to the bonding of last honeycomb segment; such forces act as a peeling force for honeycomb segments bonded to each other; as a result, the adhesive layers used for bonding of the lower position honeycomb segments are peeled, resulting in a reduction in adhesivity in part of the honeycomb structure obtained.

In order to solve the above problem and provide a bonding method for production of ceramic honeycomb structure, which can bond all honeycomb segments uniformly at an intended adhesivity by allowing the adhesive layers present between each honeycomb segments to be kept in their state when the honeycomb segments have been laminated, irrespective of the order of lamination of each honeycomb segment, there was proposed a bonding method for production of a ceramic honeycomb structure which is constituted by bonding, via adhesive layers, a plurality of porous honeycomb segments each having a large number of passages divided by partition walls and extending in the axial direction of honeycomb segment, which bonding method comprises laminating a required number of porous honeycomb segments via an adhesive layer present between the to-be-adhered sides of each two porous honeycomb segments and then applying a pressure to the total porous honeycomb segments via the outermost honeycomb segment, to bond the whole porous honeycomb segments simultaneously (see, for example, Patent Document 2).

In any of the above two Patent Documents, however, the bonding material is pressed and spread by application of load; therefore, the bonding material needs to have fluidity. Hence, there was an inconvenience that the bonding material shrinks between the bonding and the appearance of strength at bonded portion (heating is necessary in any of the above two Patent Documents) and there occurs the non-uniformity of bonding width or the shifting of bonding portion. The non-uniformity of bonding width or the shifting of bonding portion invites stress concentration during the actual use of the honeycomb structure obtained, causing a problem of generation of inconveniences such as crack formation and the like.
Patent Document 1: JP-A-2000-7455
Patent Document 2: JP-A-2004-262670

WO 2005/105705 describes a honeycomb structure wherein plural honeycomb segments are integrally bonded. The honeycomb structure comprises a plurality of honeycomb segments having an outer wall, a partition wall arranged inside the outer wall, and a plurality of cells defined by the partition wall and penetrating in the axial direction; a bonding layer arranged between the honeycomb segments for bonding and uniting the honeycomb segments; and an intermediate layer arranged between the bonding layer and the honeycomb segments. The intermediate layer has not more than 25 volume% of fine pores having a diameter of not less than 0.5 µm relative to the total volume thereof.

WO 03/067041 describes a honeycomb filter for exhaust gas decontamination. Also discussed are an adhesive of low heat capacity; a coating material of low heat capacity; and a process for producing the honeycomb filter. The honeycomb filter comprises a plurality of columnar porous ceramic members bound by means of an adhesive layer, the columnar porous ceramic members each comprising a multiplicity of through-holes having bulkheads interposed therebetween and arranged in longitudinal direction in parallel relationship, the bulkheads interposed between the through-holes capable of functioning a particle trapping filter. The thermal expansion coefficient (α_{L}) of the adhesive layer and the thermal expansion coefficient (α_{F}) of the porous ceramic members satisfy the relationship: 0.01 < |α_{L} - α_{F}|/α_{F} < 1.0.

JP 2005 154202 describes a ceramic honeycomb structure. To form the honeycomb structure, a plurality of honeycomb segments, each having a cell structure with a plurality of cells each of which is partitioned by a porous partition wall and forms a passage for a fluid, and a porous outer wall arranged at the outer periphery of the cell structure are unified by joining the outer walls to each other with a joining material. The joining material contains colloidal silica and/or colloidal alumina, and forms a joining layer on each outer wall after drying. The outer walls are joined to each other though the joining layer.

### Disclosure of the Invention

The present invention has been made in view of the above-mentioned problems of prior art. The present invention aims at providing a process for producing a honeycomb structure wherein a plurality of honeycomb segments are reliably bonded to each other without causing inconveniences such as cracking, peeling and the like at the bonding portions of honeycomb segments; also described is a bonding material which can bond to-be-bonded bodies to each other without causing inconveniences such as cracking, peeling and the like at the bonding portions of to-be-bonded bodies.

According to the present invention, there is provided a process for producing the honeycomb structure, as set out in claim 1.

In the present invention, by adding a heat-gelling organic binder having a thickening-initiating temperature of 75°C or lower or a thermosetting resin, the resulting bonding material can be dried or can express a strength, more quickly. Thereby, there can be suppressed the dispersion of bonding width or the shifting of bonding position, which have occurred with bonding materials having fluidity before drying, making it possible to obtain a honeycomb structure wherein a plurality of honeycomb segments are reliably bonded to each other without causing bonding inconveniences such as cracking, peeling and the like at the bonding portions.

### Brief Description of the Drawings

Fig. 1A is a drawing explaining a mode of a honeycomb structure and shows a perspective view of a honeycomb segment.
Fig. 1B is a drawing explaining a mode of a honeycomb structure and shows a perspective view of a honeycomb structure.
Fig. 1C is a drawing explaining a mode of a honeycomb structure and shows a plan view of a honeycomb structure.
Fig. 2A is a drawing schematically showing a mode of the process for producing a honeycomb structure.
Fig. 2B is a drawing schematically showing a mode of the process for producing a honeycomb structure.
Fig. 2C is a drawing schematically showing a mode of the process for producing a honeycomb structure.

### Explanation of Numerical Symbols

1 is a honeycomb structure; 2 is a partition wall; 3 is a cell; 5 is a cell structure; 7 is an outer wall; 8 is a bonding layer; 12 is a honeycomb segment; 36 is a bonded body; 42 is a diamond tool; 43 is a coating material; 44 is a leveling plate; 45 is a shaft; 46 is a handle; 47 is an abutting jig; 48 is a periphery-coating machine; and 50 is an outer wall.

### Best Mode for Carrying Out the Invention

The mode for carrying out the present invention is described below. However, the present invention is in no way restricted to the following mode.

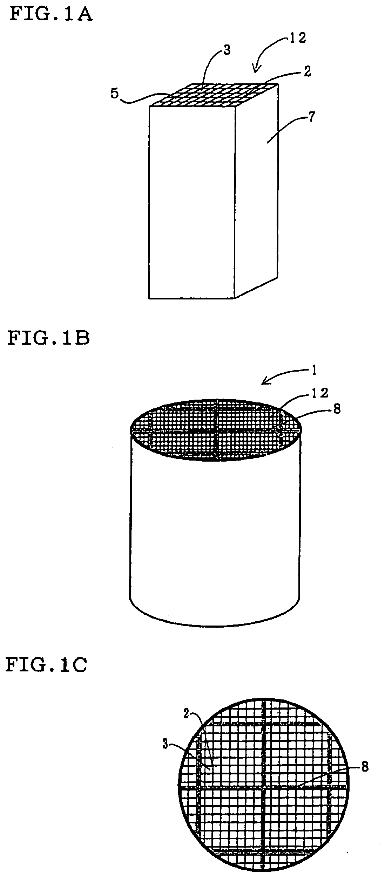

Figs. 1A to 1C are each a drawing explaining a mode of the honeycomb structure. Fig. 1A is a perspective view of a honeycomb segment; Fig. 1B is a perspective view of a honeycomb structure; and Fig. 1C is a plan view of a honeycomb structure. The honeycomb structure 1 of the present mode is produced by bonding, with a bonding material, a plurality of honeycomb segments 12 each comprising a cell structure 5 having a plurality of cells 3 divided by porous partition walls 2 and functioning as a fluid passage, and a porous outer wall 7 provided at the periphery of the cell structure 5, to each other at the outer walls 7 of the honeycomb segments 12 to obtain an integral body. The first structure of the present mode is a honeycomb structure obtained by bonding with a bonding material containing a heat-gelling organic binder having a thickening-initiating temperature of 75°C or lower. The second is a honeycomb structure obtained by bonding with a bonding material containing a thermosetting resin.

Organic binder refers generally to an organic bonding material, and bonding material refers to a material which is used for bonding or fixing solids of same kind or different kinds to form a part, a product, etc. In the case of ceramic production, the organic binder means organic compounds which are added to enable molding of ceramic raw material powder and impart the strength necessary for maintenance of the shape of the molding obtained. In the present invention the organic binder is methyl cellulose.

Gelling refers generally to a phenomenon in which a sol is changes to a gel. It occurs when a sol is cooled, or when a solvent, a salt or the like is added to a sol, or when a mechanical impact is applied to a sol. For example, when an aqueous gelatin solution is cooled, there occurs a transition from sol to gel; and the gel returns to a sol when heated. As such an example, agarose (a main component of agar) is also known.

In the present invention, there is used, as a constituent component, an organic binder which shows a so-called heat-gelling phenomenon in which, contrary to the above gelling, an aqueous solution thereof becomes a gel when heated and, when cooled, the gel returns to the original aqueous solution.

Heat-gelling refers generally to a phenomenon in which an aqueous alkyl cellulose or hydroxyalkyl cellulose solution becomes a gel when heated and, when cooled, the gel returns to the original aqueous solution. Such an aqueous solution showing heat-gelling, which is reversible phenomenon, which solution has different viscosity restore temperatures when heating and cooling, that is, a hysteresis property. As substances showing heat-gelling, there can be generally mentioned hydroxyethyl methyl cellulose, hydroxyethyl ethyl cellulose, hydroxypropyl methyl cellulose, hydroxypropyl ethyl cellulose, hydroxybutyl methyl cellulose, etc. In the present invention methyl cellulose is used as the organic binder.

In the present invention, as the organic binder, there is used only an organic binder which gels upon heating and whose gelling temperature is 75°C or lower. In the present invention the organic binder is methyl cellulose.

Thickening agent refers generally to a material which is added to increase the viscosity of a fluid. Cellulose derivatives such as methyl cellulose, carboxymethyl cellulose and the like are a thickening agent dispersible in water.

Therefore, in the first embodiment, there is used a bonding material containing, of the above-mentioned preferred organic binders, an organic binder which shows a heat-gelling phenomenon and has a thickening-initiating temperature of 75°C or lower in the heat-gelling phenomenon. The thickening action of the organic binder suppresses the fluidity of the bonding material.

For example, an aqueous solution of methyl cellulose becomes a gel when heated and, when cooled, becomes a sol. It is considered that the crosslinking zone brought about by gelling is formed by a hydrophobic interaction. In-depth studies have been made and various products are being marketed by various companies. With respect to, for example, methyl cellulose, products of different properties are being marketed by Sin-Etsu Chemical Co., Ltd. under the trade name of "Metolose".

Preferably, the bonding material used in the present invention contains any of inorganic particles and a colloidal oxide.

As the inorganic particles, there can be mentioned powders of ceramics such as cordierite, silicon carbide, silicon nitride, alumina, mullite, zirconia, zirconium phosphate, aluminum titanate, titania and the like; and powders obtained by combining two or more kinds of the above powders. The bonding material can have an improved affinity by being appropriately selected in view of the matching with the material of honeycomb segment (kind of ceramic) on which the bonding material is to be coated. In particular, a cordierite powder or a silicon carbide powder can be used preferably.

As the colloidal oxide, there can be mentioned, for example, silica sol, alumina sol, colloidal silica and colloidal alumina. They may be used singly or in combination of two or more kinds.

In the present invention, as to the cell density of honeycomb segment (the number of cells per unit honeycomb sectional area intersecting the fluid passages of honeycomb segment at right angles), there is no particular restriction. However, too small a cell density results in an insufficient geometric surface area and a too large a cell density results in too large a pressure loss; therefore, none of them is preferred. The cell density is preferably 0.9 to 310 cells/cm² (6 to 2,000 cells/in²). As to the shape of cell section (cell section intersecting the fluid passage at right angles), there is no particular restriction, either. The cell sectional shape may be any selected from polygons such as triangle, tetragon and hexagon, circle, oval, corrugation, etc.; however, it is preferably a triangle, a tetragon or a hexagon from the standpoint of production. As to the thickness of partition wall, there is no particular restriction, either. However, too small a partition wall thickness results in an insufficient strength of honeycomb segment and too large a thickness results in too large a pressure loss; therefore, none of them is preferred. The thickness of partition wall is preferably 50 to 2,000 µm.

As to the shape of honeycomb segment, there is no particular restriction, either, and any shape can be employed. For example, it is preferred that a square pole shape such as shown in Fig. 1A is used as a basic shape, such basic shapes are bonded into one piece as shown in Fig. 1B, and the honeycomb segments 12 constituting the outer surface of honeycomb structure 1 are allowed to have shapes matching the peripheral shape of honeycomb structure 1. It is also possible that the section of each honeycomb segment intersecting the fluid passages of honeycomb segment at right angles has a fan shape.

As to the shape of the section of honeycomb structure intersecting the fluid passages of honeycomb structure at right angles, there is no particular restriction, either, and any shape can be selected from round shape such as true circle, oval, ellipse, or polygon such as triangle, tetragon or pentagon, amorphous shape, etc. When the honeycomb structure described herein is used as a catalyst carrier incorporated into an internal combustion engine, a boiler, a chemical reactor, a fuel cell reformer, etc., a metal having a catalytic activity may be preferably loaded on the honeycomb structure. Representative metals having a catalytic activity include platinum (Pt), palladium (Pd), rhodium (Rd), etc. At least one kind of these is preferably loaded on the honeycomb structure.

Meanwhile, when the honeycomb structure is used as a filter (e.g. DPF) for capture/removal of particulate substance (soot) present in exhaust gas, it is preferred that a given number of cells are plugged at one end face of the honeycomb structure, the remainder of cells are plugged at other end face, and neighboring cells, when seen at each end face, are plugged alternately (each end face looks checkerwise and each cell is plugged at either of the two ends). Owing to such plugging, for example, a soot-containing exhaust gas incoming from one end face of honeycomb structure passes through the partition walls and leaves from other end face of honeycomb structure. In passing of exhaust gas through partition walls, the porous partition walls function as a filter and can capture the soot. As the captured soot accumulates on the partition walls, an increase in pressure loss appears; as a result, engine undergoes a load and there appears a reduction in fuel consumption and operability; therefore, it becomes necessary to periodically burn and remove the soot using a heating means such as heater and regenerate the function of the filter. In order to promote the burning during the regeneration, the above-mentioned metal having a catalytic activity may be loaded on the honeycomb structure.

The honeycomb structure obtained by bonding is subjected to hot-air drying or the like, to vaporize the water contained in the bonding material and allow the honeycomb structure to express a strength necessary for shape maintenance. In this case, the temperature in the vicinity of the bonding material shows no increase and remains stagnant at 75 to 100°C owing to the heat of vaporization of water. During the period, each bonded portion has strong areas and weak areas, which gives rise to the non-uniformity of shrinkage and the shifting of bonded portion, caused by vibration or self-weight. Hence, by adding a heat-gelling organic binder having a thickening-initiating temperature of 75°C or lower, a strength is imparted to each bonded portion prior to the stagnation of temperature rise. The effect of heat-gelling is larger as the addition amount of organic binder is larger and, when the addition amount is smaller than 0.1 mass %, the effect does not spread to all the particles of bonding material and no sufficient effect is expected. The effect is expectable when bonding is made with a bonding material containing the organic binder preferably in an amount of 1 mass % or more, and the effect is particularly striking when the content of organic binder is 5 mass % or more. The effect is further striking when the organic binder has a thickening-initiating temperature of 75°C or lower. In the present invention the organic binder is methyl cellulose.

A thermosetting resin can show an effect as an accelerator for drying and curing, too. The thermosetting resin refers generally to a compound (e.g. a natural or synthetic resin) which can show the insolubility or non-fusibility exhibited by liquid or plastic substance when catalyzed, heated or given an energy (e.g. light). The thermosetting resin described herein, when heated, gives rise to a crosslinking reaction between the molecules and is converted to a non-fusible, insoluble polymer having a three-dimensional network structure. There can be mentioned, for example, urea resin, melamine resin, phenolic resin, epoxy resin, unsaturated polyester resin and acrylic resin. Any of these resins has a chemically reactive functional group in the molecule and their properties when cured differ depending upon their chemical compositions. In the present invention, a thermosetting resin can be used as an accelerator for drying and curing, and a phenolic resin, an epoxy resin, etc. are particularly preferred.

In using a bonding material containing a heat-gelling organic binder or a thermosetting resin, it is effective, for arrival at a thickening-initiating temperature or a thermosetting temperature in a short time, to conduct drying by applying a micro wave, or to conduct drying by dielectric heating, or to conduct drying by heating a honeycomb structure not only from outside but also from inside. The temperature elevation time up to thickening-initiating temperature or thermosetting temperature can be shortened by using heated honeycomb segments. It is also effective to conduct bonding using a bonding material and immediately subjecting the resulting body to an atmosphere of 100°C.

In the present invention, "drying" of bonding material refers to that the liquid component in the bonding material is vaporized at a temperature at which the components in the bonding material causes no fusion or the like, that is, causes substantially no firing and, as a result, the bonding material is solidified (gelled). Thus, the honeycomb structure presently described is obtained by drying alone (no firing takes place) of bonding material, resultant formation of bonding layer, and subsequent bonding of honeycomb segments to each other at their outer walls; therefore, in the honeycomb structure, there hardly appear bonding defects such as cracking in bonding layer, peeling of bonding layer per se and the like, caused, for example, by differences in thermal expansion coefficient and shrinkage ratio between bonding layer and honeycomb segment.

Also, in the honeycomb structure presently described, the bonding layer is formed by drying alone (no firing takes place) of bonding material and, thereby, honeycomb segments are bonded to each other at the outer walls; therefore, the effect that bonding defects hardly appear, is striking particularly when the honeycomb structure is large.

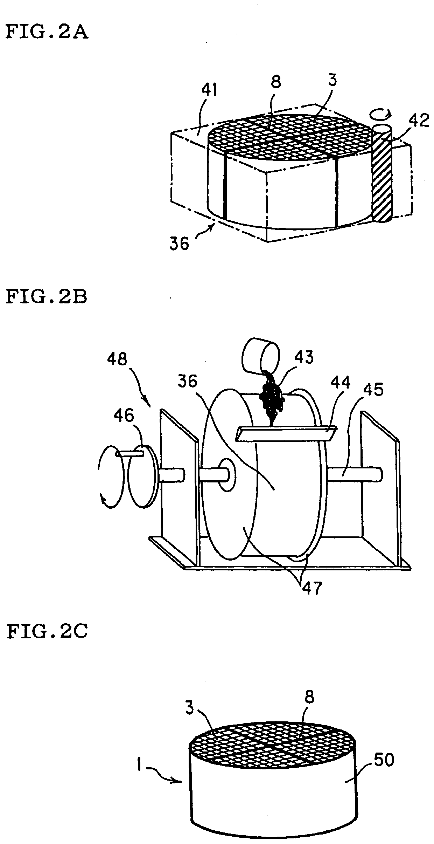

At least part of the periphery of the honeycomb structure (bonded body) obtained by bonding of honeycomb segments may be removed as necessary. Specifically explaining, as shown in Fig. 2A, for example, cells 3 are removed from the outer wall preferably by at least two cells, more preferably by two to four cells. Here, removal of cells means that at least part of the partition walls forming each cell is removed and the four sides of the bonded body are made not to be completely surrounded by partition walls. The removal can be conducted, for example, by grinding a bonded body 36 from its periphery using a grinding means such as diamond tool 42 or the like, to remove removal portions 41 including a plurality of cells 3.

When at least part of the periphery of the bonded body 36 has been removed, a coating material 43 is coated on the removed portions to form an outer wall 50 of a honeycomb structure 1 as shown in Fig. 2B and Fig. 2C. The coating material 43 preferably contains at least one member selected from colloidal silica, colloidal alumina, ceramic fiber and ceramic particles. The ceramic particles include, for example, silicon carbide.

In coating of the coating material, a periphery-coating machine 48 such as shown in Fig. 2B is used, whereby an outer wall having a uniform thickness can be formed. Specifically explaining, the two end faces of the bonded body 36 in which part of the periphery has been removed, are masked by an abutting jig 47 composed of nylon, polyvinyl chloride or the like, and the bonded body 36 is held and fixed by a shaft 45 fitted with a rotary handle 46 at one end. Then, the handle 46 is rotated and a coating material 43 can be uniformly coated on the periphery of the bonded body 36 with a leveling plate 44. Incidentally, the thickness of the outer wall can be set by appropriately adjusting the size of the abutting member 47 relative to the size of the bonded body 36.

The bonding material used in the present invention forms a bonding layer by simply being dried without being fired and thereby can bond to-be-bonded bodies to each other; therefore, an effect that bonding defects hardly appear, appears strikingly particularly when each to-be-bonded body is large (the coating area by bonding material is large).

When the bonding material described herein is coated on the bonding surface of each porous, to-be-bonded body, the difference in shrinkage between different sites of the bonding layer formed arises hardly and there hardly arises inconveniences in bonding layer, such as cracking, peeling and the like. Therefore, the bonding material described herein is preferably used in mutual bonding of bonding surfaces (outer walls) of a plurality of porous honeycomb segments composed of ceramic. As the ceramic constituting each porous honeycomb segment, there can be mentioned, for example, cordierite, silicon carbide, silicon nitride, alumina, mullite, zirconia, zirconium phosphate, aluminum titanate, silicon carbide-silicon composite material, and titania. In using these bonding materials, it is effective, in order to allow the bonding material to arrive at a thickening-initiating temperature or a thermosetting temperature in a short time, to employ a method of applying a micro wave to conduct drying; a method of heating a honeycomb structure not only from outside but also from inside to promote drying; a method of using heated honeycomb segments to shorten the temperature elevation time up to thickening-initiating temperature or thermosetting temperature; and so forth. It is also effective to employ a method of subjecting a bonded body right after bonding to an atmosphere of 100°C.

### Examples

The present invention is described in more depth by way of Examples. However, the present invention is not restricted to these Examples.

### 1. Production of honeycomb segment

A silicon carbide powder and a silicon powder were mixed as raw materials for honeycomb segment, at a mass ratio of 80:20. Thereto were added, as pore formers, starch and a foamed resin. There were further added methyl cellulose, hydroxypropoxyl methyl cellulose, a surfactant and water to prepare plastic clay. The clay was subjected to extrusion and the extrudate was dried by a micro wave and hot air to obtain a honeycomb segment formed body having a partition wall thickness of 310 µm, a cell density of 46.5 cells/cm² (300 cells/in²), a square sectional shape of 35 mm x 35 mm, and a length of 152 mm. The cell ends of the honeycomb segment formed body were plugged so that the two end faces of the formed body looked checkerwise. That is, the plugging was conducted so that each cell is plugged at one end and each two neighboring cells are plugged at different ends. As the plugging agent, the same materials as the raw materials for honeycomb segment were used. After the plugging of cell ends, drying was conducted; then, degreasing was conducted in the atmosphere at about 400°C; thereafter, firing was conducted in an Ar inert atmosphere at about 1,450°C to obtain a honeycomb segment of porous structure in which SiC crystal particles were bonded by Si.

### 2. Preparation of bonding materials

There were mixed 40 mass % of a silicon carbide powder as inorganic particles, 30 mass % of an aqueous solution containing 40 mass % of a silica gel, as an inorganic binder, 1 mass % of a puddle, and 29 mass % of an aluminosilicate fiber. Water was added to the mixture, followed by kneading for 30 minutes using a mixer, to obtain a bonding material A (a standard bonding material) containing no organic binder. In this bonding material was compounded, as a heat-gelling organic binder, methyl cellulose having a thickening-initiating temperature of 70°C or 85°C, or, as a thermosetting resin, a phenolic resin (for reference), in the proportion shown in Table 1, to prepare bonding materials B to F.

**Table 1**

| No. of bonding material | Organic binder | Thickening-initiating temperature (°C) | Addition amount (mass %) |
|---|---|---|---|
| Bonding material A | Not used | - | - |
| Bonding material B | Methyl cellulose | 70 | 0.2 |
| Bonding material C | Methyl cellulose | 70 | 2 |
| Bonding material D | Methyl cellulose | 70 | 6 |
| Bonding material E | Methyl cellulose | 85 | 2 |
| Bonding material F* | Phenolic resin | - | 2 |

| | | | |
|---|---|---|---|
| * For reference | | | |

### 3. Bonding of honeycomb segments and evaluation

Using each of the bonding materials shown in Table 1, 16 same honeycomb segments were bonded with a target bonding width of 1 mm; drying was conducted at 200°C for 2 hours; then, dispersion of bonding width and shifting of bonding were observed. The dispersion of bonding width was measured at various bonding sites (24 sites). The shifting of bonding was confirmed by counting the number of sites where the shifting by two cells or more was observed. Further, the periphery of each bonded body obtained was ground so that the bonded body after grinding had a cylindrical shape; a coating material was coated on the ground surface; and a heat treatment was applied at 500°C for 2 hours to obtain each honeycomb structure. Each honeycomb structure was fitted to the exhaust pipe of diesel engine; soot was accumulated inside the honeycomb structure in an amount of 8 g/L and then the honeycomb structure was regenerated; this operation was repeated 50 times. After the test, the presence or absence of cracking at the end face of honeycomb structure was examined. The test results are shown in Table 2.

**Table 2**

| | No. of bonding material used | Dispersion of bonding width (mm) | Shifting of bonding (number of sites) | Cracking after test |
|---|---|---|---|---|
| Ex. 1 | B | 0.7∼1.3 | 0 | No |
| Ex. 2 | C | 0.8∼1.3 | 0 | No |
| Ex. 3 | D | 0.9∼1.2 | 0 | No |
| Ex. 4* | F | 0.9∼1.2 | 0 | No |
| Comp. Ex. 1 | E | 0.6∼1.2 | 2 | Yes |
| Comp. Ex. 2 | A | 0.3∼1.3 | 6 | Yes |

| | | | | |
|---|---|---|---|---|
| * Reference Example | | | | |

The honeycomb structures of the present invention each obtained by bonding with a bonding material containing 0.2 to 6 mass % of a heat-gelling organic binder having a thickening-initiating temperature of 75°C or lower, showed neither shifting of bonding nor after-test cracking. The honeycomb structure obtained by bonding with a bonding material containing a thermosetting resin, showed as well neither shifting of bonding nor after-test cracking.

### Industrial Applicability

With the honeycomb structure, process for production thereof and bonding material, according to the present invention, there can be suppressed the dispersion of bonding width and shifting of bonding, which have hitherto arisen in bonding materials having fluidity before drying; therefore, they can be suitably used, for example, in a carrier for catalyst loading, installed in internal combustion engine, boiler, chemical reactor, fuel cell reformer, etc., or in a filter for capture of particulates in exhaust gas.

## Claims

1. A process for producing a ceramic-made honeycomb structure (1), which comprises a bonding step of bonding, with a bonding material, a plurality of honeycomb segments (12) each comprising a cell structure (5) having a plurality of cells (3) divided by porous partition walls (2) and functioning as a fluid passage, and a porous outer wall (7) provided at the periphery of the cell structure (5), to each other at the outer walls (7) of honeycomb segments (12) to obtain an integral body, in which bonding step, a bonding material containing 0.1 mass % or more of a heat-gelling organic binder having a thickening-initiating temperature of 75°C or lower is coated on each outer wall (7), the coated bonding material is dried at a temperature of 100°C or higher at which no firing occurs, a liquid component of the bonding material is vaporized, and the bonding material solidified to form a bonding layer (8), and the outer walls (7) are bonded to each other via the bonding layer (8);
wherein the organic binder is methyl cellulose.

## Patentansprüche

1. Verfahren zur Herstellung einer aus Keramik hergestellten Wabenstruktur (1), das einen Verbindungsschritt eines haftschlüssigen Verbindens einer Vielzahl von Wabensegmenten (12) mit einem Haftverbindungsmaterial, die jeweils eine Zellstruktur (5) mit einer Vielzahl von Zellen (3), die durch poröse Trennwände (2) unterteilt sind und als ein Fluiddurchlass fungieren, und eine poröse Außenwand (7), die am Randbereich der Zellstruktur (5) bereitgestellt ist, umfassen, miteinander an den Außenwänden (7) der Wabensegmente (12) umfasst, um einen einstückig ausgebildeten Körper zu erhalten, wobei in dem Verbindungsschritt ein Haftverbindungsmaterial, das 0,1 Masse-% oder mehr eines wärmegelierenden organischen Bindemittels enthält, das eine Verdickungsinitierungstemperatur von 75 °C oder weniger aufweist, auf jeder Außenwand (7) aufgetragen wird, das aufgetragene Haftverbindungsmaterial bei einer Temperatur von 100 °C oder mehr, bei der kein Brennen erfolgt, getrocknet wird, eine Flüssigkeitskomponente des Haftverbindungsmaterials verdampft und das Haftverbindungsmaterial sich verfestigt, um eine Haftverbindungsschicht (8) zu bilden, und die Außenwände (7) über die Haftverbindungsschicht (8) miteinander haftschlüssig verbunden werden;
wobei das organische Bindemittel Methylcellulose ist.

## Revendications

1. Procédé de fabrication d'une structure en nid d'abeille constituée de céramique (1), qui comprend une étape de liaison consistant à lier, à l'aide d'un matériau de liaison, une pluralité de segments en nid d'abeille (12), chacun comprenant une structure cellulaire (5) ayant une pluralité de cellules (3) divisées par des parois de séparation poreuses (2) et fonctionnant comme un passage de fluide, et une paroi externe poreuse (7) disposée à la périphérie de la structure cellulaire (5), les uns aux autres au niveau des parois externes (7) de segments en nid d'abeille (12) pour obtenir un corps d'un seul tenant, dans laquelle étape de liaison, un matériau de liaison contenant 0,1 % en masse ou plus d'un liant organique thermogélifiant ayant une température d'amorçage d'épaississement de 75°C ou moins est revêtu sur chaque paroi externe (7), le matériau de liaison revêtu est séché à une température de 100°C ou plus à laquelle température aucun embrasement ne se produit, un composant liquide du matériau de liaison est vaporisé, et le matériau de liaison est solidifié pour former une couche de liaison (8), et les parois externes (7) sont liées les unes aux autres par l'intermédiaire de la couche de liaison (8) ;
dans lequel le liant organique est une méthylcellulose.
